# EUROPÄISCHE PATENTANMELDUNG

(11) **EP 0 896 093 A2**
(43) Veröffentlichungstag der Anmeldung: **10.02.1999**
(21) Anmeldenummer: 98113644.3
(22) Anmeldetag: 22.07.1998
(51) Int. Cl.: E01C 19/20, B60B 33/00

(54) **Streugerät**

(30) Priorität: 07.08.1997 DE 19734116
(71) Anmelder: Schmidt Holding Europe GmbH, 79837 St. Blasien (DE)
(72) Erfinder: Lugtenberg, Felix Albertus Ignatius, 8103 ET Raalte (NL)
(74) Vertreter: Grättinger & Partner (GbR)

(57) **Zusammenfassung**

Ein Streugerät für das Ausbringen von Streustoff auf Verkehrsflächen umfaßt einen Vorratsbehälter (1), eine Fördereinrichtung (2), eine Austragseinrichtung (3) und eine durch ein Laufrad (4) angetriebene Antriebseinheit. Das Laufrad (4) ist in einem um eine Schwenkachse (10) schwenkbaren Laufradträger gelagert. Zwischen mindestens einen ersten, mit dem Laufradträger gekoppelten Anlenkpunkt (12) einerseits und mindestens einen zweiten, ortsfesten Anlenkpunkt (15, 16) andererseits ist eine Hydraulikeinheit (29) geschaltet, die mindestens zwei hydraulische Arbeitsräume (17, 18) umfaßt, welche bei einem Verschwenken des Laufradträgers einer entgegengesetzt gerichteten Volumenveränderung unterliegen und über eine Ausgleichsleitung (19) miteinander kommunizieren. Die Ausgleichsleitung (19) weist ein Vorspannventil (25) und eine Strömungsdrossel (26) auf.

## Beschreibung

Die vorliegende Erfindung betrifft ein Streugerät für das Ausbringen von Streustoff auf Verkehrsflächen, umfassend einen Vorratsbehälter, eine Fördereinrichtung, eine Austragseinrichtung und eine durch ein Laufrad angetriebene Antriebseinheit, wobei das Laufrad in einem um eine Schwenkachse schwenkbaren Laufradträger gelagert ist und der Durchstoßpunkt der Schwenkachse durch die Fahrbahn vor dem Aufstandspunkt des Laufrades auf dieser liegt.

Ein derartiges Streugerät gehört zum Stand der Technik. Es geht beispielsweise aus dem europäischen Patent 0290040 als bekannt hervor. Auch das Schweizer Patent 453410 offenbart ein gattungsgemäßes Streugerät. Mit dem Laufrad ist im allgemeinen eine Hydraulikpumpe verbunden. Diese treibt über Hydraulikmotore die Fördereinrichtung (Förderband oder Förderschnecke) und die Austragseinrichtung (Streuteller, Pendelstreuer oder dgl.) an. Allerdings ist auch bereits ein mechanischer Antrieb von Fördereinrichtung und Austragseinrichtung durch das Laufrad vorgeschlagen worden.

Der um eine - i.a. vertikale - Schwenkachse schwenkbare Laufradträger gattungsgemäßer Streugeräte sorgt für einen Nachlauf des Laufrades; dies bedeutet, daß der Aufstandspunkt des Laufrades auf der Fahrbahn bezogen auf die Fahrtrichtung hinter dem Durchstoßpunkt der Schwenkachse des Laufradträgers durch die Fahrbahn liegt. Bei Kurvenfahrt nimmt, in Abhängigkeit von dem Kurvenradius, das Laufrad automatisch eine mehr oder weniger stark gegenüber der Fahrzeuglängsrichtung ausgelenkte Stellung ein in der Weise, daß ein Radieren des Laufrades auf der Fahrbahn unterbunden wird. Eine derartige schwenkbare Lagerung des Laufrades gewinnt in jüngster Zeit zunehmend an Bedeutung, weil die zum Ausbringen von Streustoff eingesetzten Streugeräte der gattungsgemäßen Art immer größer werden mit dem Ergebnis, daß der Abstand zwischen dem Laufrad des Streugeräts und den Hinterrädern des Fahrzeuges, auf das das Streugerät aufgesetzt ist, immer größer wird.

Ein bislang nicht in zufriedenstellender Weise gelöstetes Problem betrifft die Tendenz von Laufrädern bzw. Laufradträgern, Eigenschwingungen um die Schwenkachse auszuführen (zu "flattern"). In der Praxis läßt sich immer wieder beobachten, daß insbesondere beim Aufsetzen des Laufrades auf die Fahrbahn bei mittleren bis höheren Fahrgeschwindigkeiten der Laufradträger umgehend beginnt, heftige Eigenschwingungen auszuführen. Dies beeinträchtigt nicht nur das Streubild. Auch stellt es eine erhebliche Belastung für das Material dar und beeinträchtigt infolge der erheblichen auf das Fahrzeug übertragenen Seitenkräfte sogar die Fahrsicherheit.

Der vorliegenden Erfindung liegt die Aufgabe zugrunde, ein Streugerät der gattungsgemäßen Art zu schaffen, welches das vorstehend beschriebene Problem mit möglichst geringem Aufwand beseitigt. Es soll somit ein Streugerät geschaffen werden, bei dem der Laufradträger selbst dann, wenn das Laufrad bei mittleren bis höheren Fahrgeschwindigkeiten auf die Fahrbahn aufgesetzt wird, keine unerwünschten Eigenschwingungen ausführt.

Gemäß der vorliegenden Erfindung wird diese Aufgabe gelöst durch eine zwischen mindestens einen ersten, mit dem Laufradträger gekoppelten Anlenkpunkt einerseits und mindestens einen zweiten, ortsfesten Anlenkpunkt andererseits geschaltete Hydraulikeinheit, die mindestens zwei hydraulische Arbeitsräume umfaßt, welche bei einem Verschwenken des Laufradträgers einer entgegengesetzt gerichteten Volumenveränderung unterliegen und über eine Ausgleichsleitung miteinander kommunizieren, wobei die Ausgleichsleitung ein Vorspannventil und eine Strömungsdrossel aufweist. Mit anderen Worten, eine Hydraulikeinheit, welche mindestens zwei hydraulische Arbeitsräume umfaßt, ist zwischen einen exzentrischen, dem Laufradträger zugeordneten, ggfs. fest mit diesem verbundenen ersten Anlenkpunkt und einen - bezogen auf das Streugerät - ortsfesten zweiten Anlenkpunkt derart geschaltet, daß sich bei einem Verschwenken des Laufradträgers einer der hydraulischen Arbeitsräume vergrößert, der andere hingegen verkleinert. Die beiden hydraulischen Arbeitsräume stehen dabei über eine Ausgleichsleitung miteinander in Verbindung; durch diese hindurch erfolgt eine Ausgleichsströmung von dem sich verkleinernden hydraulischen Arbeitsraum zu dem sich vergrößernden hydraulischen Arbeitsraum. Dabei wird durch die Integration einer Kombination eines Vorspannventils und einer Strömungsdrossel in der Ausgleichsleitung sichergestellt, daß der Laufradträger tatsächlich ausschließlich bei Kurvenfahrt des Fahrzeuges oder Fahrtrichtungsumkehr ausschwenkt, nicht hingegen im Rahmen von Eigenschwingungen ("Flattern") des Laufradträgers bei Geradeausfahrt des Fahrzeugs.

Die im Rahmen der Erfindung vorgesehene Hydraulikeinheit läßt sich auf verschiedene Weise realisieren. Eine erste bevorzugte Weiterbildung der Erfindung sieht vor, daß die Hydraulikeinheit zwei einfach wirkende Hydraulikzylinder umfaßt. Diese können insbesondere einerseits an einem gemeinsamen exzentrischen ersten Anlenkpunkt des Laufradträgers bzw. eines mit diesem starr verbundenen Bauteils und andererseits an jeweils einem eigenen ortsfesten zweiten Anlenkpunkt angelenkt sein. Zweckmäßigerweise liegen dabei die beiden ortsfesten zweiten Anlenkpunkte auf einer Geraden, welche die Schwenkachse des Laufradträgers schneidet, wobei die beiden ortsfesten zweiten Anlenkpunkte von der Schwenkachse denselben Abstand aufweisen. Die Anordnung der einzelnen Komponenten der Hydraulikeinheit ist dabei derart, daß sich bei Geradeausfahrt, wenn das Laufrad eine zur Fahrtrichtung parallele Mittelstellung einnimmt, ein symmetrischer Aufbau ergibt.

Eine weitere bevorzugte Weiterbildung der Erfindung zeichnet sich dadurch aus, daß statt der beiden einfach wirkenden Hydraulikzylinder der vorstehend beschriebenen Ausführungsform zwei doppelt wirkende Hydraulikzylinder vorgesehen sind, die Hydraulikeinheit im übrigen jedoch übereinstimmend aufgebaut ist wie vorstehend erläutert. Auf diese Weise läßt sich ein kompakterer Aufbau der Hydraulikeinheit realisieren. Denn durch Zusammenfassen von jeweils zwei hydraulischen Arbeitsräumen der beiden doppelt wirkenden Hydraulikzylinder läßt sich - bei gleichem Verschwenken des Laufradträgers - die Ausgleichsströmung vergrößern; oder umgekehrt, eine Ausgleichsströmung, die gleich groß ist wie bei der zuerst beschriebenen bevorzugten Ausführungsform, läßt sich mit kleineren, kompakteren Hydraulikkomponenten erzeugen.

Im Rahmen der vorliegenden Erfindung kann gemäß einer dritten bevorzugten Ausführungsform die Hydraulikeinheit auch einen einzigen doppelt wirkenden Hydraulikzylinder umfassen. Dieser muß dann allerdings eine durchgehende Kolbenstange aufweisen, da anderenfalls bei gleichem in beiden Arbeitsräumen herrschendem Druck durch eine Flächendifferenz zwischen beiden Seiten des Kolbens eine Auslenkkraft auf den Laufradträger wirken würde.

Die mit zwei - doppelt oder einfach wirkenden - Hydraulikzylindern arbeitenden Hydraulikeinheiten haben gegenüber solchen mit einem einzigen Hydraulikzylinder den Vorteil, daß sie im Betrieb spielfrei arbeiten. Denn durch die beiden jeweils auf Druck belasteten Hydraulikzylinder ergibt sich eine Vorspannsituation insbesondere auch in deren Anlenkpunkten.

Unabhängig von der konkreten Ausgestaltung der Hydraulikeinheit (siehe oben) steht, sofern das Laufrad, wie dies im allgemeinen der Fall ist, eine Hydraulikpumpe antreibt, die Ausgleichsleitung in aller Regel mit der Antriebseinheit in hydraulischer Verbindung. D.h., in der Ausgleichsleitung wie auch in den hydraulischen Arbeitsräumen der Hydraulikeinheit herrscht bei statischen Verhältnissen der im Hydrauliksystem der Antriebseinheit herrschende Druck. Ein derartiger hydraulischer Anschluß der Hydraulikeinheit an die Antriebseinheit gewährleistet nicht nur eine Nachförderung von Hydraulikflüssigkeit im Falle einer Leckage in der Hydraulikeinheit. Insbesondere läßt sich, sofern die Hydraulikeinheit zwei symmetrisch angeordnete Hydraulikzylinder umfaßt (s.o.), durch einen derartigen hydraulischen Anschluß der Ausgleichsleitung an die Antriebseinheit infolge der sich bei einer Auslenkung des Laufradträgers aus seiner Mittellage in unterschiedlichem Maße ändernden Hebelarme eine auf den Laufradträger wirkende, diesen in die Mittellage vorspannende Rückstellkraft ausüben. Und diese Rückstellkraft hängt, was ein weiterer Vorteil ist, von dem in der Antriebseinheit herrschenden Druck ab; bei einer großen Belastung des Streuers steigt der Systemdruck und somit auch die Rückstellkraft, und bei langsamem Rangieren lassen sich geringere Rückstellkräfte realisieren als bei schneller Fahrt während eines Streueinsatzes. Des weiteren läßt der genannte hydraulische Anschluß der Ausgleichsleitung an die Antriebseinheit zu, daß aus der Hydraulikeinheit bei einer Auslenkung des Laufradträgers aus seiner Mittellage Hydraulikflüssigkeit abfließt, was je nach der konkreten Ausgestaltung der Hydraulikeinheit notwendig ist. Hier gilt der Zusammenhang, daß bei solchen Hydraulikeinheiten, die bei aus seiner Mittellage ausgelenktem Laufradträger auf diesen eine auf die Mittellage gerichtete Rückstellkraft ausüben, Hydraulikflüssigkeit aus der Hydraulikeinheit abströmt, wenn der Laufradträger aus seiner Mittellage heraus ausgelenkt wird. Sofern eine hydraulische Verbindung der Ausgleichsleitung zu der Antriebseinheit nicht vorgesehen ist, ist in diesem Falle zweckmäßigerweise ein Hydrospeicher an die Ausgleichsleitung angeschlossen, der insoweit dieselbe Funktion wahrnehmen kann mit der Einschränkung, daß die Rückstellkräfte unabhängig sind von der Fahrgeschwindigkeit.

Eine andere bevorzugte Weiterbildung der Erfindung zeichnet sich dadurch aus, daß die Ausgleichsleitung über eine hydraulische Gleichrichterschaltung an die hydraulischen Arbeitsräume angeschlossen ist. Dies bedeutet, daß unabhängig von der Richtung der Auslenkung des Laufradträgers aus seiner Mittelstellung die die Ausgleichsleitung durchströmende Ausgleichsströmung stets übereinstimmend gerichtet ist. Dies wiederum zieht nach sich, daß die Rückstell- und Dämpfungscharakteristik der Hydraulikeinheit bei beiden Auslenkrichtungen des Laufradträgers absolut identisch ist; und darüberhinaus lassen sich in die Ausgleichsleitung wegen der stets gleichgerichteten Ausgleichsströmung relativ preisgünstige Komponenten (Vorspannventil, Strömungsdrossel) integrieren.

Ist eine derartige hydraulische Gleichrichterschaltung vorgesehen und ist darüberhinaus die Ausgleichsleitung an die Hydraulikpumpe der Antriebseinheit hydraulisch angeschlossen, so ist die hydraulische Schaltung zweckmäßigerweise so ausgelegt, daß Hydraulikflüssigkeit von der Hydraulikpumpe der Antriebseinheit allein über die Rückschlagventile der Gleichrichterschaltung zu den hydraulischen Arbeitsräumen der Hydraulikeinheit gelangt, daß hingegen jede Abströmung von Hydraulikflüssigkeit aus den hydraulischen Arbeitsräumen zwingend die Ausgleichsleitung durchströmt.

Wiederum andere bevorzugte Ausgestaltungen des erfindungsgemäßen Streugeräts zeichnen sich dadurch aus, daß der Ansprechdruck des Vorspannventils und/oder der Strömungswiderstand der Strömungsdrossel einstellbar ist. Dies gestattet die individuelle Anpassung der Rückstell- und Dämpfungscharakteristik der Hydraulikeinheit an die jeweiligen Verhältnisse.

Nur der Vollständigkeit halber sei erwähnt, daß im Rahmen der vorliegenden Erfindung der erste, an den Laufradträger gekoppelte Anlenkpunkt für die Hydraulikeinheit keineswegs starr mit dem Laufradträger oder einem mit diesem fest verbundenen Bauteil verbunden sein muß. Dieses kann zwar der Fall sein, beispielsweise in dem mit der Welle des Laufradträgers ein Hebel fest verbunden ist, welcher den genannten ersten Anlenkpunkt trägt. Es kann jedoch durchaus auch zwischen den Laufradträger und den ersten Anlenkpunkt ein - wie auch immer geartetes - Getriebe zwischengeschaltet sein, welches bewirkt, daß sich Laufradträger und erster Anlenkpunkt bei einem Verschwenken des Laufradträgers nicht im selben Maße bewegen. Insbesondere kann in diesem Sinne die Schwenkbewegung des Laufradträgers untersetzt werden mit dem Ergebnis, daß bspw. ein Verschwenken des Laufradträgers um 180° (Übergang von Vorwärtsfahrt auf Rückwärtsfahrt) zu einem Verschwenken des ersten Anlenkpunkts um lediglich 90° führt. Auch ist eine Umsetzung der Drehbewegung des Laufradträgers innerhalb des Getriebes in eine translatorische Bewegung im Rahmen der vorliegenden Erfindung denkbar, bspw. unter Nutzung eines Zahnstangengetriebes.

Im Folgenden wird die Erfindung anhand dreier in der Zeichnung dargestellte bevorzugte Ausführungsbeispiele näher erläutert. Es zeigt
- Fig. 1: in schematischer Darstellung die hydraulische Anlage einer ersten Ausführungsform des erfindungsgemäßen Streugeräts,
- Fig. 2: in schematischer Darstellung die hydraulische Anlage einer zweiten Ausführungsform des erfindungsgemäßen Streugeräts und
- Fig. 3: in schematischer Darstellung die hydraulische Anlage einer dritten Ausführungsform des erfindungsgemäßen Streugeräts.

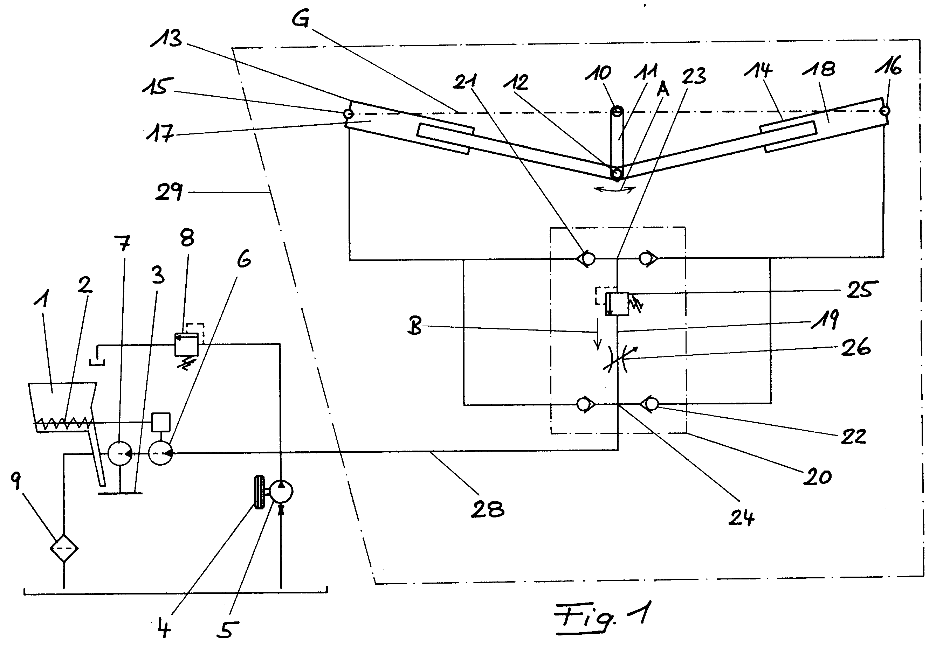

Das in der Zeichnung (Fig. 1 bis 3) dargestellte Streugerät umfaßt jeweils, in als solches bekannter Art, einen Vorratsbehälter 1 für den Streustoff, an dessen Boden eine - beispielsweise als Förderschnecke ausgebildete - Fördereinrichtung 2 angeordnet ist. Mittels der Fördereinrichtung wird der Streustoff zu einer - beispielsweise als Streuteller ausgebildeten - Austragseinrichtung 3 transportiert. Ein auf die Fahrbahn absenkbares Laufrad 4 treibt eine Antriebseinheit an, welche eine Hydraulikpumpe 5, einen Hydraulikmotor 6 für die Fördereinrichtung und einen Hydraulikmotor 7 für die Austragseinrichtung umfaßt. Ein Vorspannventil 8 begrenzt den in dem Hydrauliksystem bestehenden Druck. Ein Rücklauffilter 9 reinigt das von den Hydraulikmotoren 6 und 7 zurückströmende Hydrauliköl. In diesem Umfang zählt das in der Zeichnung dargestellte Streugerät zum hinlänglich bekannten Stand der Technik, so daß es an dieser Stelle keiner weitergehenden Erläuterungen bedarf.

Das Laufrad 4 ist in einem Laufradträger gelagert, welcher seinerseits um eine im wesentlichen vertikale Achse 10 verschwenkbar ist. Mit der entsprechenden Welle des Laufradträgers ist ein Hebel 11 fest verbunden; dieser läßt sich somit gemeinsam mit dem Laufradträger um die Achse 10 verschwenken (Doppelpfeil A). Am freien Ende des Hebels 11 ist ein erster Anlenkpunkt 12 angeordnet, mit welchem zwei einfach wirkende Hydraulikzylinder 13 bzw. 14 gelenkig verbunden sind. Jeder der beiden Hydraulikzylinder 13 und 14 ist darüberhinaus an einem zweiten, bezüglich des Streugeräts ortsfesten Anlenkpunkt 15 bzw. 16 gelenkig angeschlagen.

Die hydraulischen Arbeitsräume 17 und 18 der Hydraulikzylinder 13 bzw. 14 sind über eine Ausgleichsleitung 19 hydraulisch miteinander verbunden. Die Ausgleichsleitung 19 ist dabei in eine hydraulische Gleichrichterschaltung 20 integriert, welche insgesamt vier Rückschlagventile umfaßt. Dabei ist mit jedem hydraulischen Arbeitsraum 17 bzw. 18 ein Abströmventil 21 und ein Zuströmventil 22 verbunden. Die beiden Abströmventile 21 sind ebenso wie die beiden Zuströmventile 22 paarweise untereinander verbunden; und die Ausgleichsleitung 19 ist zwischen dem Verbindungspunkt 23 der Abströmventile und dem Verbindungspunkt 24 der Zuströmventile geschaltet. Die beim Verschwenken des Hebels 11 von dem sich verkleinernden hydraulischen Arbeitsraum des einen Hydraulikzylinders zu dem sich vergrößernden hydraulischen Arbeitsraum des anderen Hydraulikzylinders gelangende Ausgleichsströmung durchströmt die Ausgleichsleitung 19 somit stets in derselben Richtung (Pfeil B).

In die Ausgleichsleitung 19 ist ein Vorspannventil 25 und eine Strömungsdrossel 26 integriert. Beide Bauteile sind einstellbar, d.h. es läßt sich sowohl der Ansprechdruck des Vorspannventils einstellen wie auch der Strömungswiderstand der Strömungsdrossel.

Der Verbindungspunkt 24 zwischen den beiden Zuströmventilen 22 steht über eine Hydraulikleitung 28 mit der Hydraulikpumpe 5 in Verbindung. Über diese Hydraulikleitung 28 wird Hydraulikflüssigkeit zu der Hydraulikeinheit 29 gefördert, sollte dort eine Leckage auftreten. Bei Auslenkung des Hebels 11 aus der in der Zeichnung dargestellten Grundstellung, die der der Geradeausfahrt des Fahrzeugs entsprechenden Mittelstellung des Laufrads 4 entspricht, erfolgt zudem durch die Hydraulikleitung 28 eine Rückströmung eines Teils der in der Hydraulikeinheit 29 vorhandenen Hydraulikflüssigkeit, weil sich der hydraulische Arbeitsraum des einen Hydraulikzylinders in einem stärkeren Maße verkleinert als sich der hydraulische Arbeitsraum des anderen Hydraulikzylinders zugleich vergrößert. Diese Verhältnisse resultieren zugleich in einer durch die Hydraulikeinheit 29 bereitgestellten, auf den Laufradträger wirkenden Rückstellkraft in seine Mittellage.

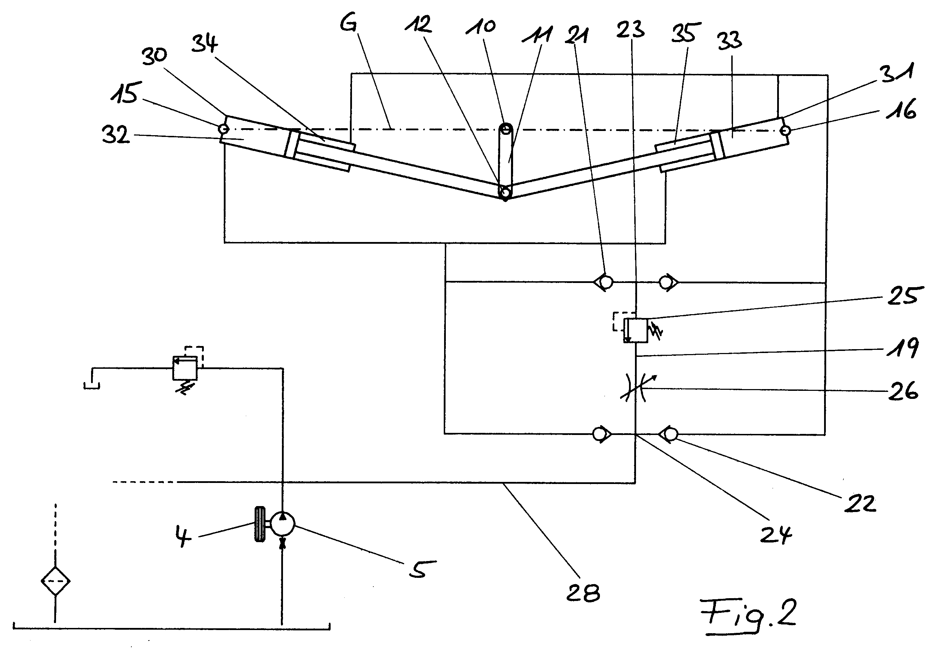

Das in Fig. 2 dargestellte Hydrauliksystem unterscheidet sich von demjenigen gemäß Fig. 1 insbesondere dadurch, daß nicht zwei einfach wirkende Hydraulikzylinder vorgesehen sind, sondern vielmehr zwei doppelt wirkende Hydraulikzylinder 30 und 31. Dementsprechend umfaßt die Hydraulikeinheit 29 insgesamt vier hydraulische Arbeitsräume 32 bis 35. Dabei sind jeweils zwei hydraulische Arbeitsräume zusammengefaßt, und zwar in der Weise, daß die beiden hydraulischen Arbeitsräume 32 und 35 einerseits und 33 und 34 andererseits miteinander verbunden sind, die bei einer Auslenkung des Hebels 11 einer gleichgerichteten Volumenänderung unterliegen. Die entsprechend zusammengefaßten hydraulischen Arbeitsräume 32/35 und 33/34 sind im übrigen an eine hydraulische Gleichrichterschaltung 20 angeschlossen, wie sie im Zusammenhang mit Fig. 1 näher beschrieben wurde. Auch im übrigen gilt das vorstehend zu Fig. 1 Gesagte für Fig. 2 in entsprechender Weise.

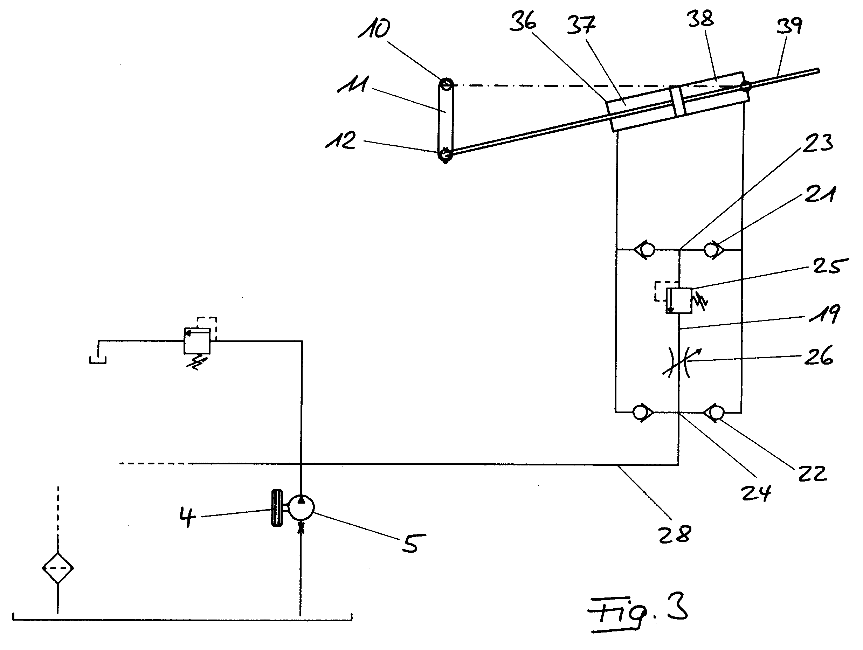

Gemäß Fig. 3 wirkt auf den mit dem Laufradträger verbundenen Hebel 11 lediglich ein einziger doppelt wirkender Hydraulikzylinder 36 mit zwei hydraulischen Arbeitsräumen 37 und 38. Die beiden hydraulischen Arbeitsräume sind wiederum an eine hydraulische Gleichrichterschaltung 20 angeschlossen, wie dies auch für die in Fig. 1 dargestellte Hydraulikeinheit 29 der Fall ist. Auf die entsprechenden Erläuterungen wird Bezug genommen.

Zu beachten ist, daß die Kolbenstange 39 des doppelt wirkenden Hydraulikzylinders 36 beide hydraulischen Arbeitsräume 37 und 38 durchsetzt. Dies stellt sicher, daß der durch die Hydraulikpumpe 5 bereitsgestellte Systemdruck nicht zu einer einseitigen Beaufschlagung des Hebels 11 führt. Allerdings ist auch zu beachten, daß das in Fig. 3 dargestellte Hydrauliksystem keine auf die Mittelstellung des Laufradträgers gerichtete Rückstellkraft auf den Hebel 11 ausübt, anders als dies für die in den Fig. 1 und 2 dargestellten Hydrauliksysteme zutrifft.

## Patentansprüche

1. Streugerät für das Ausbringen von Streustoff auf Verkehrsflächen, umfassend einen Vorratsbehälter (1), eine Fördereinrichtung (2), eine Austragseinrichtung (3) und eine durch ein Laufrad (4) angetriebene Antriebseinheit, wobei das Laufrad (4) in einem um eine Schwenkachse (10) schwenkbaren Laufradträger gelagert ist und der Durchstoßpunkt der Schwenkachse (10) durch die Fahrbahn vor dem Aufstandspunkt des Laufrades (4) auf dieser liegt,
gekennzeichnet durch eine zwischen mindestens einen ersten, mit dem Laufradträger gekoppelten Anlenkpunkt (12) einerseits und mindestens einen zweiten, ortsfesten Anlenkpunkt (15, 16) andererseits geschaltete Hydraulikeinheit (29), die mindestens zwei hydraulische Arbeitsräume (17, 18; 32-35; 37, 38) umfaßt, welche bei einem Verschwenken des Laufradträgers einer entgegengesetzt gerichteten Volumenveränderung unterliegen und über eine Ausgleichsleitung (19) miteinander kommunizieren, wobei die Ausgleichsleitung (19) ein Vorspannventil (25) und eine Strömungsdrossel (26) aufweist.

2. Streugerät nach Anspruch 1,
dadurch gekennzeichnet,
daß die Hydraulikeinheit (29) zwei einfach wirkende Hydraulikzylinder (13, 14) umfaßt.

3. Streugerät nach Anspruch 1,
dadurch gekennzeichnet,
daß die Hydraulikeinheit (29) zwei doppelt wirkende Hydraulikzylinder (30, 31) umfaßt.

4. Streugerät nach einem der Ansprüche 1 bis 3,
dadurch gekennzeichnet,
daß die beiden Hydraulikzylinder (13, 14; 30, 31) auf den Laufradträger eine dieser in die Mittellage vorspannende Rückstellkraft ausüben.

5. Streugerät nach einem der Ansprüche 1 bis 4,
dadurch gekennzeichnet,
daß die beiden Hydraulikzylinder (13, 14; 30, 31) an demselben ersten Anlenkpunkt (12) angeschlossen sind und daß die beiden zweiten Anlenkpunkte (15, 16) auf einer Geraden (G) liegen, welche die Schwenkachse (10) des Laufradträgers schneidet.

6. Streugerät nach Anspruch 1,
dadurch gekennzeichnet,
daß die Hydraulikeinheit (29) einen doppelt wirkenden Hydraulikzylinder (36) umfaßt.

7. Streugerät nach einem der Ansprüche 1 bis 6,
dadurch gekennzeichnet,
daß die Ausgleichsleitung (19) über eine hydraulische Gleichrichterschaltung (20) an die hydraulischen Arbeitsräume (17, 18; 32-35; 37, 38) angeschlossen ist.

8. Streugerät nach Anspruch 7,
dadurch gekennzeichnet,
daß die Gleichrichterschaltung (20) vier Rückschlagventile umfaßt, wobei mit jedem hydraulischen Arbeitsraum (17, 18; 32-35; 37, 38) ein Zuströmventil (22) und ein Abströmventil (21) verbunden sind, daß die beiden Zuströmventile (22) und die beiden Abströmventile (21) paarweise untereinander verbunden sind und daß die Ausgleichsleitung (19) zwischen den Verbindungspunkt (24) der Zuströmventile (22) und den Verbindungspunkt (23) der Abströmventile (21) geschaltet ist.

9. Streugerät nach einem der Ansprüche 1 bis 8,
dadurch gekennzeichnet,
daß die Antriebseinheit eine Hydraulikpumpe (5) umfaßt, mit welcher die Ausgleichsleitung (19) in hydraulischer Verbindung (28) steht.

10. Streugerät nach einem der Ansprüche 1 bis 9,
dadurch gekennzeichnet,
daß der Ansprechdruck des Vorspannventils (25) einstellbar ist.

11. Streugerät nach einem der Ansprüche 1 bis 9,
dadurch gekennzeichnet,
daß der Strömungswiderstand der Strömungsdrossel (26) einstellbar ist.

12. Streugerät nach einem der Ansprüche 1 bis 9,
dadurch gekennzeichnet,
daß sowohl der Ansprechdruck des Vorspannventils (25) als auch der Strömungswiderstand der Strömungsdrossel (26) einstellbar sind.

13. Streugerät nach einem der Ansprüche 1 bis 12,
dadurch gekennzeichnet,
daß die Schwenkachse (10) des Laufradträgers im wesentlichen vertikal ausgerichtet ist.
